(19) Europäisches Patentamt

**European Patent Office**

**Office européen des brevets**

(11) Veröffentlichungsnummer: **0 261 098 B1**

(12) **EUROPÄISCHE PATENTSCHRIFT**

(45) Veröffentlichungstag der Patentschrift: **19.11.92**

(21) Anmeldenummer: **87890194.1**

(22) Anmeldetag: **20.08.87**

(51) Int. Cl.⁵: **B24D 3/00**, B24D 11/00

(54) Schleifmittel bzw. Schleifmittelzusammensetzung und Verfahren zu deren Herstellung.

(30) Priorität: **21.08.86 AT 2252/86**

(43) Veröffentlichungstag der Anmeldung:
**23.03.88 Patentblatt 88/12**

(45) Bekanntmachung des Hinweises auf die
Patenterteilung:
**19.11.92 Patentblatt 92/47**

(84) Benannte Vertragsstaaten:
**CH DE FR GB LI SE**

(56) Entgegenhaltungen:
**DE-A- 1 080 771**
**GB-A- 1 082 291**
**US-A- 4 047 903**

(73) Patentinhaber: **Wagini, Helga**
**Josef-Messner-Strasse 17**
**A-5020 Salzburg(AT)**

(72) Erfinder: **Wagini, Heinz**
**verstorben**
**(AT)**
Erfinder: **Wendrinsky, Josef, Dr. Dipl.-Ing.**
**Brückengasse 10-12/2/29**
**A-1060 Wien(AT)**
Erfinder: **Grienauer, Walter**
**Eichenstr. 2b/I/4/26**
**A-1120 Wien(AT)**

(74) Vertreter: **Wildhack, Helmut, Dipl.-Ing. Dr. et al**
**Patentanwälte Dipl.-Ing. Leo Brauneiss**
**Dipl.-Ing. Dr. Helmut Wildhack Landstrasser**
**Hauptstrasse 50 Postfach 281**
**A-1031 Wien(AT)**

**Beschreibung**

Die Erfindung betrifft ein Schleifmittel in Form einer Schleiffolie oder eines Schleifkörpers, bei welcher bzw. welchem an eine Trägerfolie bzw. einem Trägerkörper Schleifkörner mittels eines strahlengehärteten Bindemittels gebunden sind, sowie Verfahren zur Herstellung des neuen Schleifmittels, wobei man auf einem Träger zumindest eine Bindemittel-Grundschicht und auf bzw. in diese, vorzugsweise im elektrischen Feld, die Schleifkörner aufbringt, das Grundbindemittel zumindest vor-bzw. anhärtet, sowie anschließend zumindest ein Deckbindemittel aufbringt und die Bindemittel aushärtet, wobei die Härtung durch Elektronenstrahlung erfolgt. Die Erfindung betrifft somit Schleifmittel mit Unterlagen bzw. Trägern, z.B.Papier, Vliesen oder Geweben, wobei diese in vielen Fällen flexibel sein können, sowie sogenannte gestreute Schleifmittel.

Aus der DE-A 22 47 103 ist eine derartige elektronenstrahgehärtete Zusammensetzung bereits bekannt, deren Bindemittel auf Basis eines mit Acryl-und/oder Methacrylsäure veresterten Epoxydharzes aufgebaut und gegebenenfalls mit einer Polycarbonsäure in einer weiteren Stufe umgesetzt worden ist.

Es ist dort weiters angegeben, daß jedenfalls zumindest teilweise mit $\alpha,\beta$-Unsättigung aufweisenden Dicarbonsäuren, z.B. Malein- oder Fumarsäure, aufgebaute ungesättigte Polyester als strahlenhärtbare Bindemittel dienen können. Es hat sich gezeigt, daß der Einsatz solcher ungesättigter Polyester - die auf Basis mindestens einer $\alpha,\beta$-ungesättigten Dicarbonsäure - sowie mindestens einer Hydroxy-Komponente aufgebaut sein müssen - als Basis des Bindemittels für die Schleifkörper von insbesondere folienartigen Schleifmitteln die Strahlenhärtung keine optimalen Ergebnisse bringen, vermutlich weil eine möglichst vollständige Auspolymerisation und Vernetzung mit dieser Härtungsmethode praktisch nicht erreichbar ist. Es ist häufig die Quellbereitschaft des Bindemittels gegenüber Wasser, gegebenenfalls sogar mit der Folge einer Desintegration des Verbundes zwischen Schleifteilchen und Bindemittel, und gegebenenfalls auch zwischen Bindemittel und Träger bei den hohen Beanspruchungen, welchen insbesondere flexible Schleifbänder unterliegen, untragbar hoch.

Allgemein ist festzuhalten, daß an die Bindemittel, die zur Fixierung der Schleifkörner auf den im Einsatz befindlichen, üblichen Substraten verwendet werden, extreme Anforderungen gestellt sind, insbesondere durch die beim Schleifvorgang auftretenden mechanischen Scherkräfte bei zumeist hohen Temperaturen und sehr oft bei gleichzeitiger Einwirkung von Wasser. Aus diesem Grund konnten die bisher verwendeten Bindemittel auf der Basis von Phenol-, Harnstoff- und Melaminformaldehydharzen nur in Sonderfällen durch andere Systeme, wie z.B. auf Basis von Epoxiden oder Ungesättigten Polyestern ersetzt werden.

Die Anforderungen, die an strahlenhärtbare Bindemittel für Schleifmittel und deren Herstellung gestellt werden, sind folgende:

Bei Einsatz in der bzw. für die Grundschicht:
a) gute Haftung auf dem Träger,
b) möglichst geringes Eindringen in den Träger, um erhöhten Bindemittelbedarf, mögliche unerwünschte Veränderungen der Eigenschaften des Trägers, zurückbleibende ungenügend ausgehärtete Bindemittelanteile usw. zu vermeiden,
c) geeignete Viskosität beim Auftragen und kornadhäsives Verhalten zur Fixierung des Schleifkornes (nicht nur in bezug auf die Position, sondern auch in bezug auf die "aufrechte" Stellung, z.B. bei elektrostatischem Kornauftrag),
d) eine geringe zur Aushärtung notwendige Dosis, da eine zu hohe Dosis oft den Träger schädigt; bei Dosen von 150 kGy wurden je nach Träger Abnahmen der Reißfestigkeit von bis zu 30 % festgestellt,
e) Wasserfestigkeit, da in vielen Fällen Kühlwasser verwendet wird.
Bei Einsatz in der bzw. für die Deckschicht:
a) wie Punkt d und e bei der Grundschicht,
b) geeignete Viskosität zum Eindrigen in die Schleifkorn-Zwischenräume,
c) gute Haftung am Schleifkorn und an der Grundschicht,
d) gute mechanische Eigenschaften beim Schleifvorgang, insbesondere genügend Härte, um die Schleifkörner bei der einseitigen Belastung in ihrer Position zu fixieren und ein Ausweichen der Körner zu vermeiden, womit eine verminderte Schleifleistung verbunden ist,
e) nicht zu spröd; das Schleifmittelsystem soll insgesamt biegsam bleiben und beim oft notwendigen Flexen nicht splittern und dabei darf die Kornfixierung nicht verloren gehen.

Eine Erfüllung dieser hochgestellten Anforderungen kann von strahlenhärtbaren Systemen üblicherweise nicht erwartet werden. So ist es bekannt, daß auf Epoxyden basierende Systeme bei zu hoher Temperaturbelastung erweichen, daß die Urethanbindung unter diesen Bedingungen ebenfalls instabil wird, und daß z.B. Systeme auf der Basis von acrylierten Melaminen mit der verlangten Härte gewöhnlich ein zu sprödes Verhalten zeigen. Systeme auf der Basis der in bzw. bei UV-härtbaren Bindemitteln vielfältig eingesetzten und für viele Zwecke bewährten ungesättigten Polyester, deren strahlenchemisch reaktive Gruppen Doppelbindungen vom Malein- oder Furmartyp darstellen, benötigen zur Aushärtung eine zumindest zwei- bis dreimal so hohe Dosis wie Verbindungen vom (Meth)acrylat-Typ, weisen eine ungenügende Vernetzung auf und entsprechen daher nicht den oben aufgezählten Anforderungen. Solche ungesättigten Polyester, wie sie auch gemäß der vorher erwähnten DE-A für die Herstellung von Schleifmitteln vorgeschlagen wurden, können, wie die praktische Erfahrung zeigte, den hohen Anforderungen bei den heute üblichen großen Schleifgeschwindigkeiten, womöglich bei unterbrochenem Schliff und den hohen Anpreßdrücken nicht entsprechen.

Überraschenderweise wurde nun gefunden, daß bei Einsatz von Kunstharzen, die durch Modifizierung, also Umsetzung von jedenfalls in $\alpha,\beta$-Stellung zu einer Carboxylgruppe keine Doppelbindung aufweisende Dicarbonsäuren enthaltenden Polyestern mit "acrylischen" Verbindungen hergestellt werden, Bindemittel erhalten werden können, mit denen die bei konventionell hergestellten Schleifmitteln üblicherweise erwarteten Eigenschaften nicht nur erreicht, sondern in bestimmten Ausführungsformen sogar weit übertroffen werden können.

Dementsprechend ist das erfindungsgemäße Schleifmittel, bei welchem an eine Trägerfolie oder einem Trägerkörper Schleifkörner mittels zumindest einem strahlengehärteten, zumindest einlagig aufgebrachten Bindemittel auf Basis von Polyestern mit ungesättigten Carbonsäuren gebunden sind, dadurch gekennzeichnet, daß zumindest eine Schicht des Bindemittels mit zumindest einem mit Acrylsäure, Methacrylsäure, Ethacrylsäure, Crotonsäure und/oder Halogenacrylsäuren bzw. deren Derivat(en) modifizierten, auf im wesentlichen in $\alpha,\beta$-Stellung zur Carboxylgruppe keine Doppelbindung aufweisenden Hydroxy- oder Di-(Poly-)carbonsäuren basierenden Polyester gebildet und strahlengehärtet ist. Das Bindemittel kann praktisch aus dem es aufbauenden modifizierten Polyester allein gebildet sein oder aber der modifizierte Polyester ist in verdünnter Form eingesetzt worden.

Ein Verfahren der eingangs genannten Art zur Herstellung der neuen Schleifmittel ist erfindungsgemäß dadurch gekennzeichnet, daß als Bindemittel zumindest ein wie eben beschriebener modifizierter Polyester eingesetzt wird oder Bindemittel auf der Basis zumindest eines solchen (meth)acrylmodifizierten Polyesters eingesetzt werden.

Im Gegensatz zu der für die bekannten Schleifmittel gemäß der vorgenannten DE-A eingesetzten Bindemittelgrundlage, die mit Polyester(grund)-ketten, welche in $\alpha,\beta$-Stellung zur Carboxylgruppe der sie aufbauenden Dicarbonsäuren Doppelbindungen aufweisen, gebildet ist, und welche mittels ionisierender Strahlung nur schlecht und unvollständig aushärtbar sind, ist gemäß der vorliegenden Erfindung das "Rückgrat" des Bindemittels durch kürzere oder längere Ketten die beschriebene $\alpha,\beta$-Unsättigung in ihrem Säureteil nicht aufweisende Polyester gebildet, die durch ungesättigte Reaktionspartner modifiziert, also mit ihnen umgesetzt sind, was, wie gefunden wurde, hohe Haltekraft für die Schleifmittelkörner im Bindemittel und dessen hohe Bindung an den Träger sichert. Das beschriebene "Polyesterrückgrat" wird durch die Umsetzung, also Modifizierung mit acrylische Doppelbindungen aufweisenden Verbindungen strahlenchemisch reaktiv und optimal polymerisierbar, wobei die (meth)acrylische(n) Doppelbindung(en) jeweils an den Enden einer Polyester-Hauptkette bzw. an den Enden eventuell vorhandener Seitenketten positioniert ist bzw. sind.

Bevorzugte Ausführungsformen der erfindungsgemäßen Schleifmittel bzw. Schleifmittel-Zusammensetzungen bzw. der erfindungsgemäßen Verfahren sind in der folgende Beschreibung, den Beispielen und den Unteransprüchen beschrieben.

Zur Modifizierung des jeweils zum Einsatz kommende speziellen Polyesters werden die eben genannten Verbindungen, vorzugsweise jedoch Acryl-und/oder Methacrylsäure bzw. deren Derivate eingesetzt.

Als Säurekomponente der wie beschrieben modifizierten Polyester können aliphatische Hydroxycarbonsäure, aliphatische, cycloaliphtische und/oder aromatische Dicarbonsäuren und/oder aromatische Polycarbonsäuren bzw. deren Derivate, wobei entsprechende Säuren jedenfalls keine $\alpha,\beta$-Unsättigung aufweisen, eingesetzt werden.

Als Beispiele für derartige Säuren werden die folgenden genannt:

Hydroxycarbonsäuren:

Glycolsäure

aliphatische Dicarbonsäuren:

Bernsteinsäure, Glutarsäure, Adipinsäure, Pimelinsäure, Suberinsäure, Acelainsäure, Sebacinsäure, i-

3

Sebacinsäure.

cycloaliphatische Dicarbonsäuren:

Tetrahydrophthalsäure, Hexahydrophthalsäure, Endomethylen-tetrahydropthalsäure, Hexachlorendomethylen-hexahydrophthalsäure, Decalindicarbonsäure.

aromatische dicarbonsäuren:

Phthalsäure, Isophthalsäure, Terephthalsäure, Di-methyl-terephthalsäure, Naphthalindicarbonsäure, Diphenyl-4,4′-dicarbonsäure.

aromatische Polycarbonsäuren:

Trimellithsäure, Pyromellithsäure.

Als Hydroxykomponente der in den erfindungsgemäßen Bindemitteln eingesetzten Polyester werden gegebenenfalls alkoxylierte Diole, Triole und/oder Polyole eingesetzt. Als Beispiele derartiger Verbindungen werden die folgenden genannt:

Diole:

Ethylenglycol, Diethylenglycol, Triethylenglycol, Tetraethylenglycol, Polyethylenglycol, Propylenglycol-1,3, Propylenglycol-1,2, Dipropylenglycol, Tripropylenglycol, Butan-1,4-diol, Butan-1,3-diol, Pentan-1,5-diol, Neopentylglycol, 2,2-Dimethylbutan-1,3-diol, 2-Methylpentan-2,4-diol, 3-Methylpentan-2,4-diol, 2,2,4-Trimethylpentan-1,3-diol, Hexan-1,6-diol, Hexan-2,4-diol, 2,2-Dimethylhexan-1,3-diol, 2-Ethylhexan-1,3-diol, Polybutadien-$\alpha,\omega$-diol, Bis-(4-hydroxycyclohexyl)-methan, Bis-(4-hydroxycyclohexyl)-propan, ethoxylierte Dianole, propoxylierte Dianole, hydr. ethoxyl. Dianole, hydr. propoxyl. Dianole.

Triole und höhere Alk.:

Trimethylolpropan, Trimethylolethan, Butan-1,2,4-triol, Glycerin, Hexan-1,2,6-triol, Tris-(hydroxyethyl)-isocyanurat, Tetramethylolcyclohexan, Pentaerythrit, Dipentaerythrit.

Bei Schleifmitteln, deren Gehalt an wie oben angegeben modifiziertem(n) Polyester(n) im Bindemittel zumindest 50 Gew.-%, vorzugsweise zumindest 70 Gew.-%, beträgt, ist neben der Einsparung an wertvollem Polyester der Vorteil von durch gezielte Einstellung der Viskosität des Bindemittels beschleunigbarer Produktion ohne Einbußen in den Betriebsbedingungen und in der Qualität der neuen Schleifmittel erzielbar.

Bei Einstellung der strahlengehärteten Bindemittelschichten gemäß Anspruch 4 lassen sich neben hoher Haftung der Schleifkörper im Bindemittel und am Träger flexible Schleifbänder mit hoher Material-Abtragungs-Wirksamkeit erzielen.

Insbesondere gegen wechselnde mechanische Belastungen unempfindliche Schleifmittel sind bei Einhaltung der im Anspruch 5 angegebenen Tiefungen erzielbar.

Besonders hohe Flexibilität und mechanische Belastbarkeit aufweisende Schleifmittel sind bei einem Schichtaufbau des die Schleifkörper haltenden Bindemittels gemäß Anspruch 6 erzielbar. Dabei kann die Grundschicht mit dem konventionellen Binder auch mit geringer bzw. geringerer Dicke bei gleichzeitig hoher Haftkraft vorliegen.

Insbesondere kann im Hinblick auf problemlose Produktionsführung bei gezielter Steuerbarkeit der Qualität vorgesehen sein, daß die hier auf neuem Gebiet eingesetzten (meth)acrylmodifizierten Polyester für die Grund- und/oder Deckschicht mit reaktiven Verdünnern bzw. Monomeren bzw. copolymerisierbaren Verbindungen, insbesondere (Meth)acrylsäureester mit 1 bis 6 (Meth)acrylgruppen pro Molekül, zur Einstellung der gewünschten Eigenschaften, z.B. Viskosität, Härte usw., auf einen Polyestergehalt von zumindest 50 Gew.-%, vorzugsweise zumindest 70 Gew.-%, verdünnt sind. Es werden hiezu mit Vorteil Bindemittel bzw. Polyester eingesetzt, deren Eigenschaften in den Ansprüchen 8 bis 14 angegeben sind bzw. deren modifizierte Polyester nach der Aushärtung die im Anspruch 14 angegebene Härte besitzen.

Dabei können durch Einhaltung der angegebenen Bereiche für die Anzahl der Doppelbindungen, Molmassen und Viskositäten jeweils auf die Schleifaufgabe gezielt abgestellte hochqualitative Schleifmittel erzielt werden.

Zur Herstellung der erfindungsgemäßen Schleifmittel kann grundsätzlich wie bekannt so vorgegangen werden, daß man auf einem Träger eine Bindemittelgrundschicht und auf diese, vorzugsweise im elektri-

4

schen Feld, die Schleifkörner aufbringt, die Grundschicht zumindest vorhärtet, sowie anschließend ein Deckbindemittel aufbringt und die Bindemittel dann voll aushärtet, wobei die Haupt-Härtung jedenfalls durch Elektronenstrahlung erfolgt. Erfindungsgemäß sind dabei Bindemittel auf der Basis von wie vorher angegebenen modifizierten Polyestern einzusetzen.

Die Schichtdicken können etwa 0,08 - 0,25 mm für die Grund- bzw. Vorschicht und etwa 0,06 - 0,20 mm für die Deck- bzw. Nachschicht betragen.

In der folgenden Tabelle ist eine Übersicht über die in den erfindungsgemäßen Schleifmitteln bzw. Schleifmittel-Zusammensetzungen bzw. in deren Bindemitteln vorteilhaft zum Einsatz kommenden Polyester gegeben:

Harz bzw. modifizierter Polyester:

MG = Molmasse, PH = Pendelhärte (DIN), DB = Doppelbindungen
Visk. = Viskosität gemessen mit einem Rotationsviskosimeter

| Harz für | MG | Funktionalität Zahl der DB/Molekül | Mol DB/kg | Visk. mPas | PH s |
|---|---|---|---|---|---|
| Grund-schicht | $500 - 10^4$ | 3 - 8 | 2 - 8 | $3.10^3 - 3.10^5$ | 100-240 |
| | $(600) - (5.10^3)$ | (4 - 6) | (3 - 7) | $(5.10^3 - 1,5.10^5)$ | (150-230) |
| Deck-schicht | 500 - 3000 | 3 - 6 | 2 - 8 | $400 - 5.10^4$ | 60-220 |
| | (600) - 1500) | (3,5- 5) | (3 - 6,5) | $(500 - 10^4)$ | (80-200) |

Bevorzugt ist es, wenn man entsprechend den Anforderungen der Schleifmitteltype bzw. den vom jeweiligen Herstellungsverfahren vorgegebenen Parametern die (meth)acrylmodifizierten Polyester zur Einstellung gewünschter Eigenschaften, z.B. Viskosität, Anzahl der Doppelbindungen/Molekül, mit reaktiven Verdünnern bzw. Monomeren bzw. copolymerisierbaren Verbindungen, insbesondere (Meth)-acrylsäureestern mit ein bis sechs (Meth)acrylresten pro Molekül, zu einem Bindemittelsystem verdünnt, in bezug auf einen Harzanteil von 50 - 100 Gew.-%, insbesondere 70 - 100 Gew.-%. Man erhält damit bei Einsatz von wie in den Ansprüchen 11-15 beschriebenen Polyestern ein Bindemittelsystem mit Eigenschaften, wie sie im Schutzbegehren beschrieben und in der folgenden Tabelle zusammengestellt sind.

## BINDEMITTELSYSTEME

FK = Harzanteil im Bindemittel,     TF = Tiefung (DIN)

| System für | FK % | Mol DB/kg | Visk. mPas | PH s | TF mm |
|---|---|---|---|---|---|
| Grund-schicht | 50 - 100 | 2,5 - 8 | $500 - 2.10^5$ | 140-240 | 0,1-5,0 |
|  | (70 - 100) | (3 - 7) | $(1500 - 10^5)$ | (160-220) | (0,3-2,5) |
| Deck-schicht | 50 - 100 | 2,5 - 8 | $80 - 5.10^4$ | 140-240 | 0,5-8,0 |
|  | (70 - 100) | (3 - 7) | (100 - 5000) | (160-220) | (1,5-5,5) |

Die Pendelhärte und die Tiefung werden im ausgehärteten Zustand entsprechend den DIN-Vorschriften gemessen.

Die in Rede stehende Modifizierung der genannten Polyester erfolgt nach bekannten Verfahren, wobei der Polyester aus einer Auswahl der für Polyestersynthesen bekannten und verwendeten Rohstoffe hergestellt wird. Die jeweils gewünschten Eigenschaften (Tabelle 1) bestimmen dabei die Auswahl der Rohstoffe.

Die Positionen der (meth)acrylischen Gruppen in den Molekülen der damit modifizierten beschriebenen Polyester können sowohl bei der Grundschicht als auch bei der Deckschicht statistisch verteilt sein; bei der Deckschicht sind sie besonders günstig an den Enden des z.B. linearen Polyestermoleküls eingebaut, was optimale Ergebnisse bringt.

Die auf den hier eingesetzten (meth)acrylmodifizierten genannten Polyestern basierenden Bindemittel können zur Optimierung noch mit reaktiven Verdünnern, auch als "Monomere" bezeichnete copolymerisierbare Verbindungen, sowie mit verschiedenen anorganischen und/oder organischen Zusatzstoffen, z.B. Füllstoffen, wie Diatomeenerde, vermischt eingesetzt werden.

Dabei ist insbesondere darauf zu achten, daß die positiven Eigenschaften der Kunstharzkomponente des Bindemittels nicht negativ beeinflußt werden. Die reaktiven Verdünner dienen zur Einstellung der Eigenschaften der eingesetzten Polyester, z.B. um nötigenfalls die Viskosität zu erniedrigen, die Härte, die Elastizität, den Grad der Vernetzung usw., zu verbessern. Die Reaktivität sollte dabei möglichst erhalten oder sogar verbessert werden. Die reaktiven Verdünner sollen auch die Wasserbeständigkeit des Bindemittels nicht negativ beeinflussen. Als reaktive Verdünner kommen vor allem Ester der (Meth)acrylsäure in Frage, die 1 bis 6 (Meth)acrylgruppen pro Molekül besitzen.

Die Härtung erfolgt vorteilhafterweise mit Elektronenstrahlen einer Energie von 150 keV bis 1 MeV, insbesondere von 250 bis 600 keV, mit einer Dosis von 5 bis 300 kGy, insbesondere mit 10 bis 120 kGy.

Im folgenden wird die Erfindung anhand von Beispielen erläutert.

Beispiel 1: Für die Herstellung eines gestreuten Schleifmittels auf Unterlagen werden folgende Bindemittel eingesetzt:

Grundschichtbindemittel GSB: Ein acrylmodifizierter Polyester PEA1, unverdünnt mit einer Viskosität von 84 Pas, einer durchschnittlichen Funktionlität von 3,3 und einer durchschnittlichen Molmasse von 1100.

Deckschichtbindemittel DSB: 70 Gewichtsteile eines acrylmodifizierten Polyesters PEA2 mit einer Viskosität von 520 mPas, einer durchschnittlichen Funktionalität von 3,3 und einer durchschnittlichen Molmasse von 800 werden mit 30 Gewichtsteilen 1,6-Hexandioldiacrylat verdünnt, wobei die derart erhaltene Mischung eine Viskosität von 99 mPas aufweist.

Auf ein beschichtetes Papier mit einem Flächengewicht von 234 g/m² wird mittels eines Aufziehgerätes das GSB in einer Stärke von 38 g/m² aufgetragen. Anschließend wird mit einer für diesen Zweck üblichen elektrostatischen Auftragsvorrichtung Korund mit der Körnung P80 aufgebracht, sodaß ein Kornauftrag von 235 g/m² erzielt wird. Das so erhaltene Zwischenprodukt wird durch Elektronenstrahlung (500 kV) mit einer Dosis von 20 kGy gehärtet. Danach wird das DSB mit einer Gummiwalze auf die in ihrer Position bereits fixierten Schleifmittelkörper aufgewalzt. Die dabei erhaltene Deckbeschichtung von 99 g/m$^2$ wird anschließend durch Elektronenstrahlung (500 kV) mit einer Dosis von 40 kGy gehärtet.

Beispiel 2: Für die Herstellung eines gestreuten Schleifmittels werden folgende Bindemittel eingesetzt:

Grundschichtbindemittel GSB: 90 Gewichtsteile eines acrylmodifizierten Polyesters PEA3 mit der Viskosität 95 Pas, einer durchschnittlichen Funktionalität von 4,3 und einer durchschnittlichen Molmasse von 770 werden mit 10 Gewichtsteilen Trimethylolpropantriacrylat verdünnt. Die Mischung weist eine Viskosität von 30 Pas auf.

Deckschichtbindemittel DSB: 70 Gewichtsteile eines acrylmodifizierten Polyesters PEA4 mit einer Viskosität von 1,5 Pas, einer durchschnittlichen Funktionalität von 3,0 und einer durchschnittlichen Molmasse von 1100 werden mit 10 Gewichtsteilen 1,6-Hexandioldiacrylat und 20 Gewichtsteilen i-Bornylacrylat verdünnt. Die Viskosität der derart erhaltenen Mischung beträgt 156 mPas.

Auf ein speziell beschichtetes Gewebe mit einem Flächengewicht von 344g/m$^2$ wird mittels eines Aufziehgeräts das GSB in einer Stärke von 43 g/m$^2$ aufgetragen. Anschließend wird mit einer für diesen Zweck üblichen elektrostatischen Auftragsvorrichtung Korund mit der Körnung P80 aufgebracht, so daß ein Kornauftrag von 263 g/m$^2$ erzielt wird. Das so erhaltene Zwischenprodukt wird durch Elektronenstrahlung (500 kV) mit einer Dosis von 30 kGy gehärtet. Danach wird das DSB mit einer Gummiwalze auf die in ihrer Position bereits fixierten Schleifmittelkörner aufgewalzt. Die dabei erhaltene Deckbeschichtung von 104 g/m$^2$ wird anschließend durch Elektronenstrahlung (500 kV) mit einer Dosis von 50 kGy gehärtet.

Beispiel 3: Für die Herstellung eines gestreuten Schleifmittels werden folgende Bindemittel eingesetzt:

Grundschichtbindemittel GSB: Ein acrylmodifizierter Polyester PEA5, unverdünnt mit einer Viskosität von 32 Pas, einer durchschnittlichen Funktionalität von 6,5 und einer durchschnittlichen Molmasse von 1500.

Deckschichtbindemittel DSB: 70 Gewichtsteile des acrylmodifizierten Polyesters PEA2 mit einer Viskosität von 520 mPas, einer durchschnittlichen Funktionalität von 3,3 und einer durchschnittlichen Molmasse von 800 werden mit 30 Gewichtsteilen 1,6-Hexandioldiacrylat verdünnt, wobei die derart erhaltene Mischung eine Viskosität von 99 mPas aufweist.

Auf ein beschichtetes Papier mit einem Flächengewicht von 234 g/m$^2$ wird mittels eines Aufziehgeräts das GSB in einer Stärke von 47 g/m$^2$ aufgetragen. Anschließend wird von Hand Siliziumkarbid P80 aufgestreut und nicht fixiertes Schleifkorn abgeklopft. Das so erhaltene Zwischenprodukt wird durch Elektronenstrahlung (500 kV) mit einer Dosis von 25 kGy gehärtet. Danach wird das DSB mit einer Gummiwalze auf die in ihrer Position bereits fixierten Schleifmittelkörner aufgewalzt. Die dabei erhaltene Deckbeschichtung von 73 g/m$^2$ wird anschließend durch Elektronenstrahlung (500 kV) mit einer Dosis von 50 kGy gehärtet.

Beispiel 4: Für die Herstellung eines gestreuten Schleifmittels werden folgende Bindemittel eingesetzt:

Grundschichtbindemittel GSB: Ein acrylmodifizierter Polyester PEA6, unverdünnt mit einer Viskosität von 1200 mPas, einer durchschnittlichen Funktionalität von 4 und einer durchschnittlichen Molmasse von 1200.

Deckschichtbindemittel DSB: 70 Gew.-Teile des acrylmodifizierten Polyesters PEA7 mit einer Viskosität von 15 Pas, einer durchschnittlichen Funktionalität von 3 und einem durchschnittlichen Molgewicht von 1500 werden mit 20 Gew.-Teilen Tripropylenglycoldiacrylat und 10 Gew.-Teilen i-Bornylacrylat verdünnt, wobei die derart erhaltene Mischung eine Viskosität von 125 mPas aufweist.

Auf ein speziell beschichtetes Gewebe mit einem Flächengewicht von 344 g/m$^2$ wird mittels eines Aufziehgeräts das GSB in einer Stärke von 51 g/m$^2$ aufgetragen. Anschließend wird mit einer für diesen Zweck üblichen elektrostatischen Auftragsvorrichtung Korund mit der Körnung P80 aufgebracht, so daß ein Kornauftrag von 235 g/m$^2$ erzielt wird. Das so erhaltene Zwischenprodukt wird durch Elektronenstrahlung (500 kV) mit einer Dosis von 20 kGy gehärtet. Danach wird das DSB mit einer Gummiwalze auf die in ihrer Position bereits fixierten Schleifmittelkörner aufgewalzt. Die dabei erhaltene Deckbeschichtung von 91 g/m$^2$ wird anschließend durch Elektronenstrahlung (500 kV) mit einer Dosis von 50 kGy gehärtet.

Beispiel 5: Für die Herstellung eines gestreuten Schleifmittels werden folgende Bindemittel eingesetzt:

EP 0 261 098 B1

Grundschichtbindemittel GSB: Hautleim wird mit Wasser auf eine Viskosität von 950 mPas verdünnt.
Deckschichtbindemittel DSB: wie bei Beispiel 1.

Auf eine beschichtetes Papier mit einem Flächengewicht von 234 g/m² wird mittels eines Aufziehgeräts das GSB in einer Stärke von 95 g/m² aufgetragen. Anschließend wird mit einer für diesen Zweck üblichen elektrostatischen Auftragsvorrichtung Korund mit der Körnung P80 aufgebracht, so daß ein Kornauftrag von 265 g/m² erzielt wird. Das so erhaltene Zwischenprodukt wird in einem Heißluftkanal getrocknet. Danach wird das DSB mit einer Gummiwalze auf die in ihrer Position bereits fixierten Schleifmittelkörner aufgewalzt. Die dabei erhaltene Deckbeschichtung von 75 g/m² wird anschließend durch Elektronenstrahlung (500 kV) mit einer Dosis von 60 kGy gehärtet.

Beispiel 6: Für die Herstellung eines gestreuten Schleifmittels werden folgende Bindemittel eingesetzt (Vergleich):

Grundschichtbindemittel GSB: 70 Gewichtsteile eines Ungesättigten Polyesters auf Maleinatbasis UPE1 mit der Viskosität 83 Pas, einer durchschnittlichen Funktionalität von 2,8 und einer durchschnittlichen Molmasse von 1200 werden mit 30 Gewichtsteilen 1,4-Butandioldimethacrylat verdünnt. Die Mischung weist eine Viskosität von 2,6 Pas auf.

Deckschichtbindemittel DSB: 60 Gewichtsteile eines Ungesättigten Polyesters UPE2 auf Maleinatbasis mit einer Viskosität von 68 Pas, einer durchschnittlichen Funktionalität von 3,5 und einer durchschnittlichen Molmasse von 1500 werden mit 5 Gewichtsteilen Trimethylolpropantriacrylat, 10 Gewichtsteilen 1,6-Hexandioldiacrylat und 25 Gewichtsteilen 1,4-Butandioldiacrylat verdünnt. Die Viskosität der derart erhaltenen Mischung beträgt 220 mPas.

Auf ein speziell beschichtetes Gewebe mit einem Flächengewicht von 344 g/m² wird mittels eines Aufziehgeräts das GSB in einer Stärke von 41 g/m² aufgetragen. Anschließend wird mit einer für diesen Zweck üblichen elektrostatischen Auftragsvorrichtung Korund mit der Körnung P80 aufgebracht, so daß eine Kornauftrag von 255 g/m² erzielt wird. Das so erhaltene Zwischenprodukt wird durch Elektronenstrahlung (500 kV) mit einer Dosis von 40 kGy gehärtet. Danach wird das DSB mit einer Gummiwalze auf die in ihrer Position bereits fixierten Schleifmittelkörner aufgewalzt. Die dabei erhaltene Deckbeschichtung von 112 g/m² wird anschließend durch Elektronenstrahlung (500 kV) mit einer Dosis von 70 kGy gehärtet.

Beispiel 7: Für die Herstellung eines gestreuten Schleifmittels auf Unterlage werden folgende Bindemittel eingesetzt (Vergleich):

Grundschichtbindemittel GSB: Ein acrylmodifiziertes Epoxidharz EPA1, unverdünnt mit einer Viskosität von 150 Pas, einer durchschnittlichen Funktionalität von 3,3 und einem durchschnittlichen Molgewicht von 650.

Deckschichtbindemittel DSB: 70 Gew.-Teile eines acrylmodifizierten Epoxidharzes EPA2 mit einer Viskosität von 5 Pas, einer durchschnittlichen Funktionalität von 2,5 und einem durchschnittlichen Molgewicht von 540 werden mit 10 Gew.-Teilen 1,4-Butandioldimethacrylat und 20 Gew.-Teilen i-Bornylacrylat verdünnt, wobei die derart erhaltene Mischung eine Viskosität von 88 mPas aufweist.

Auf ein speziell beschichtetes Gewebe mit einem Flächengewicht von 344 g/m² wird mittels eines Aufziehgeräts das GSB in einer Stärke von 46 g/m² aufgetragen. Anschließend wird mit einer für diesen Zweck üblichen elektrostatischen Auftragsvorrichtung Korund mit der Körnung P80 aufgebracht, so daß ein Kornauftrag von 241 g/m² erzielt wird. Das so erhaltene Zwischenprodukt wird durch Elektronenstrahlung (500 kV) mit einer Dosis von 25 kGy gehärtet. Danach wird das DSB mit einer Gummiwalze auf die in ihrer Position bereits fixierten Schleifmittelkörner aufgewalzt. Die dabei erhaltene Deckbeschichtung von 87 g/m² wird anschließend durch Elektronenstrahlung (500 kV) mit einer Dosis von 50 kGy gehärtet.

Prüfmethode:

Aus den in den Beispielen 1 bis 7 erhaltenen Schleifmittelmustern werden Prüfstreifen mit den Maßen 20 × 300 mm derart um ein Prüfrohr mit einer genormten Materialgüte gelegt, daß der halbe Umfang des Rohres ständig vom Prüfstreifen kontaktiert wird. Die Bestimmung des Gewichtsverlustes des Prüfrohres sowie des Prüfstreifens erfolgt dreimal nach jeweils 500 Hüben.
Der Prüfstreifen wird durch eine Gewicht von 5 kg gespannt und durch einen Kurbeltrieb 500 mal über das Prüfrohr hin und her gezogen.

Prüfergebnisse:

8

| Beispiel | Abschliff (A) g | Schleifmittelverlust (SV) g | Faktor A/SV |
|----------|-----------------|------------------------------|-------------|
| 1 | 1,01 | 0,15 | 6,7 |
| 2 | 1,24 | 0,20 | 6,2 |
| 3 | 0,98 | 0,17 | 5,8 |
| 4 | 1,01 | 0,19 | 5,5 |
| 5 | 0,90 | 0,21 | 4,3 |
| 6 (Vergleich) | 0,37 | 0,27 | 1,4 |
| 7 (Vergleich) | 0,79 | 0,25 | 3,2 |

Wie den Prüfergebnissen zu entnehmen ist, zeigt es sich, daß bei Einsatz von Ungesättigten Polyestern Schleifmittel erhalten werden, die den eingangs angeführten Anforderungen nicht entsprechen und daher in der Praxis keine Verwendung finden können.

Die Beispiele zeigen, daß,wie erfindungsgemäß vorgesehen, mit einem Schleifmittel, bei dem das strahlungsgehärtete Bindemittel mit zumindest einem mit Acrylsäure, Methacrylsäure, Ethacrylsäure, Crotonsäure und/oder Halogenacrylsäuren bzw. deren Derivat(en) modifizierten gesättigten, also mit in $\alpha$, $\beta$-Stellung zu einer Carboxylgruppe keine Unsättigung aufweisenden Hydroxy- und/oder Dicarbonsäuren aufgebauten Polyester gebildet ist, wesentlich bessere Eigenschaften erreicht werden als mit bisher bekannten Schleifmitteln.

**Patentansprüche**

1. Schleifmittel, bei welchem an eine Trägerfolie oder einen Trägerkörper Schleifkörner mittels zumindest einem strahlengehärteten, zumindest einlagig aufgebrachten Bindemittel auf Basis von Polyestern mit ungesättigten Carbonsäuren gebunden sind, dadurch gekennzeichnet, daß zumindest eine Schicht des Bindemittels mit zumindest einem mit Acrylsäure, Methacrylsäure, Ethacrylsäure, Crotonsäure und/oder Halogenacrylsäuren bzw. deren Derivat(en) modifizierten, mit in $\alpha$-$\beta$-Stellung zu einer Carboxylgruppe keine Unsättigung aufweisenden Hydroxy-und/oder Di-(Poly-)carbonsäuren aufgebauten Polyester gebildet und strahlengehärtet ist.

2. Schleifmittel nach Anspruch 1, dadurch gekennzeichnet, daß der Gehalt des wie im Anspruch 1 angegebenen modifizierten Polyesters im Bindemittel zumindest 50 Gew.-%, vorzugsweise zumindest 70 Gew.-%, beträgt.

3. Schleifmittel nach Anspruch 1 oder 2, dadurch gekennzeichnet, daß das Bindemittel mindestens einen bezüglich der Säurekomponente auf Basis keine $\alpha,\beta$-Unsättigung aufweisender aliphatischer Hydroxycarbonsäure(n), keine $\alpha$-$\beta$-Unsättigung aufweisender aliphatischer, keine $\alpha$-$\beta$-Unsättigung aufweisender cycloaliphatischer und/oder aromatischer Dicarbonsäure(n) und/oder aromatischer Polycarbonsäure(n) gebildeten Polyester und/oder mindestens einen bezüglich der Alkoholkomponente auf Basis gegebenenfalls alkoxylierter Diole, Triole und/oder Polyole gebildeten Polyester aufweist.

4. Schleifmittel nach einem der Ansprüche 1 bis 3 mit an den Träger gebundener Bindemittel-Grund- und darüber angeordneter Deckschicht und in diesen Schichten befindlichen Schleifkörner, dadurch gekennzeichnet, daß das strahlengehärtete Bindemittel von Grundschicht und/oder Deckschicht jeweils eine Pendelhärte von 140 bis 240 s, vorzugsweise von 160 bis 220 s, aufweist.

5. Schleifmittel nach einem der Ansprüche 1 bis 4, dadurch gekennzeichnet, daß das strahlengehärtete Bindemittel der Grundschicht eine Tiefung von 0,1 bis 5,0 mm, vorzugsweise von 0,3 bis 2,5 mm, und/oder jenes der Deckschicht eine Tiefung von 0,5 bis 8,0 mm, vorzugsweise von 1,5 bis 5,5 mm, aufweist.

9

**6.** Schleifmittel nach einem der Ansprüche 1 bis 5, dadurch gekennzeichnet, daß bei mehrlagigem Bindemittel zumindest eine Schicht, vorzugsweise Grundschicht, mit einem konventionellen Bindemittel aus der Gruppe tierischer Leim, Hautleim, oder Harz auf Harnstoff- oder Phenol-Basis gebildet ist.

**7.** Verfahren zur Herstellung eines Schleifmittels nach einem der Ansprüche 1 bis 6, bei dem man auf eine Trägerfolie oder einen Trägerkörper eine Bindemittel-Grundschicht und auf bzw. in diese, mit oder ohne Wirkung eines elektrischen Feldes die Schleifkörper aufbringt, das Bindemittel der Grundschicht zumindest vor- bzw. anhärtet, sowie anschließend eine Bindemittel-Deckschicht aufbringt und die Bindemittel durch Elektronenstrahlung aushärtet, dadurch gekennzeichnet, daß als Bindemittel für zumindest eine der Schichten mindestens ein, wie in den vorhergehenden Ansprüchen angegebener, modifizierter, mit Hydroxy-und/oder Di-(Poly)carbonsäure ohne, $\alpha,\beta$-Unsättigung aufgebauter Polyester oder zumindest Bindemittel auf Basis eines derartig modifizierten Polyesters eingesetzt wird.

**8.** Verfahren nach Anspruch 7, dadurch gekennzeichnet, daß ein Bindemittel für die Grund- und/oder Deckschicht eingesetzt wird, welches mindestens einen, wie im Anspruch 1 angegebenen, modifizierten Polyester für die Grund- und/oder Deckschicht aufweist, welcher mit mindestens einem reaktiven Verdünner bzw. mindestens einer copolymerisierbaren Verbindung, insbesondere (Meth)acrylsäureester mit 1-6 (Meth)acrylgruppen pro Molekül, auf einen Polyestergehalt von zumindest 50 Gew.-%, vorzugsweise von zumindestens 70 Gew.-%, verdünnt ist.

**9.** Verfahren nach Anspruch 7 oder 8, dadurch gekennzeichnet, daß ein Bindemittel für die Grund- und/oder Deckschicht eingesetzt wird, welches jeweils einen mittleren Doppelbindungsgehalt von 2,5 bis 8 Mol/kg, vorzugsweise von 3 bis 7 Mol/kg, aufweist.

**10.** Verfahren nach einem der Ansprüche 7 bis 9, dadurch gekennzeichnet, daß ein Bindemittel für die Grundschicht mit einer Viskosität von 500 bis $2.10^5$ mPas, vorzugsweise von 1500 bis $10^5$ mPas, und/oder ein Bindemittel für die Deckschicht mit einer Viskosität von 80 bis $5.10^4$ mPas, vorzugsweise von 100 bis $5.10^3$ mPas, eingesetzt wird bzw. werden.

**11.** Verfahren nach einem der Ansprüche 7 bis 10, dadurch gekennzeichnet, daß ein Bindemittel für die Grundschicht mit zumindest einem wie im Anspruch 1 oder 3 angegebenen, modifizierten Polyester mit einem mittleren Gehalt an Doppelbindungen pro Molekül von 3 bis 8, vorzugsweise von 4 bis 6, bzw. mit einem mittleren Doppelbindungsgehalt von 2 bis 8 Mol/kg, vorzugsweise von 3 bis 7 Mol/kg, und/oder ein Bindemittel für die Deckschicht mit mindestens einem wie angegebenen modifizierten Polyester mit einem mittleren Gehalt an Doppelbindungen pro Molekül von 3 bis 6, vorzugsweise von 3,5 bis 5, bzw. mit einem mittleren Doppelbindungsgehalt von 2 bis 8 Mol/kg, vorzugsweise von 3 bis 6,5 Mol/kg, eingesetzt wird bzw. werden.

**12.** Verfahren nach einem der Ansprüche 7 bis 11, dadurch gekennzeichnet, daß ein Bindemittel für die Grundschicht mit mindestens einem modifizierten Polyester mit einer mittleren Molmasse von 500 bis $10^4$, vorzugsweise von 600 bis $5.10^3$, und/oder ein solches für die Deckschicht mit mindestens einem modifizierten Polyester mit einer mittleren Molmasse von 500 bis 3000, vorzugsweise von 600 bis 1500, eingesetzt wird bzw. werden.

**13.** Verfahren nach einem der Ansprüche 7 bis 12, dadurch gekennzeichnet, daß ein Bindemittel für die Grundschicht mit mindestens einem modifizierten Polyester mit einer Viskosität von $3.10^3$ bis $3.10^5$ mPas, vorzugsweise von $5.10^3$ bis $1,5.10^5$ mPas, und/oder ein solches für die Deckschicht mit mindestens einem modifizierten Polyester mit einer Viskosität von 400 bis $5.10^4$ mPas, vorzugsweise von 500 bis $10^4$ mPas, eingesetzt wird bzw. werden.

**14.** Verfahren nach einem der Ansprüche 7 bis 13, dadurch gekennzeichnet, daß ein Bindemittel für die Grundschicht mit mindestens einem nach Strahlungshärtung eine Pendelhärte nach König von 100 bis 240 s, vorzugsweise von 150 bis 230 s, aufweisenden, modifizierten Polyester und/oder ein solches für die Deckschicht mit mindestens einem nach der Strahlungshärtung eine Pendelhärte nach König von 60 bis 220 s, vorzugsweise von 80 bis 200 s, aufweisenden, modifizierten Polyester eingesetzt wird bzw. werden.

**15.** Verfahren nach einem der Ansprüche 7 bis 14, dadurch gekennzeichnet, daß ein Bindemittel für die Grund- und/oder Deckschicht eingesetzt wird, welchem Zusatzstoffe aus der Gruppe der Füllstoffe, Netzmittel, bis zu einem Anteil von maximal 50 Gew.-%, vorzugsweise von maximal 30 Gew.-% zugesetzt sind.

**16.** Verfahren nach einem der Ansprüche 7 bis 15, dadurch gekennzeichnet daß das bzw. die Bindemittel durch Elektronenstrahlen mit 175 keV bis 1 MeV, vorzugsweise von 250 keV bis 600 keV, mit einer Dosis von 5 bis 300 kGy, vorzugsweise von 10 bis 120 kGy, gehärtet wird bzw. werden.

**Claims**

1. An abrasive, in which abrasive grains are bonded to a carrier foil or a carrier body by means of at least one radiation-hardened binder based on polyesters with unsaturated carboxylic acids and applied in at least one layer, **characterized in that** at least one layer of the binder is formed with at least one polyester modified with acrylic acid, methacrylic acid, ethacrylic acid, crotonic acid and/or halogen acrylic acids or a derivative or derivatives thereof respectively and formed by hydroxy- and/or di(poly-)carboxylic acids having no unsaturation in the $\alpha$-$\beta$-position relative to a carboxyl group, and is radiation-hardened.

2. An abrasive according to Claim 1, **characterized in that** the content of the modified polyester - as indicated in Claim 1 - in the binder amounts to at least 50% by weight, preferably at least 70% by weight.

3. An abrasive according to Claim 1 or 2, **characterized in that** the binder has at least one polyester formed with respect to the acid component on the basis of aliphatic hydroxycarboxylic acid or acids having no $\alpha$-$\beta$-unsaturation, aliphatic dicarboxylic acid or acids having no a-$\beta$-unsaturation, cycloaliphatic and/or aromatic dicarboxylic acid or acids having no $\alpha$-$\beta$-unsaturation and/or aromatic polycarboxylic acid or acids, and/or at least one polyester formed with respect to the alcohol component on the basis where appropriate of alkoxylated diols, triols and/or polyols.

4. An abrasive according to any one of Claims 1 to 3 having a binder base layer bonded to the carrier and a cover layer arranged thereabove and abrasive grains present in the said layers, **characterized in that** the radiation-hardened binder of the base layer and/or cover layer has in each case a pendulum hardness of from 140 to 240 s, preferably from 160 to 220 s.

5. An abrasive according to any one of Claims 1 to 4, **characterized in that** the radiation-hardened binder of the base layer has a depth of from 0•1 to 5•0 mm, preferably from 0•3 to 2•5 mm, and/or that of the cover layer has a cupping of from 0•5 to 8•0 mm, preferably from 1•5 to 5•5 mm.

6. An abrasive according to any one of Claims 1 to 5, **characterized in that** in the case of a multiple-layer binder at least one layer, preferably the base layer, is formed with a conventional binder from the group of animal glue, hide glue, or resin based on urea or phenol.

7. A method of producing an abrasive according to any one of Claims 1 to 6, in which a binder base layer is applied to a carrier foil or a carrier body and the abrasive grains are set onto or into the latter with or without the action of an electrical field, the binder of the base layer is hardened at least before or upon [application], and a binder cover layer is then applied and the binder is hardened by electron radiation, **characterized in that** at least one modified polyester - as indicated in the preceding Claims - formed with hydroxy- and/or di-(poly)carboxylic acid without $\alpha$-$\beta$-unsaturation or at least a binder based on a polyester modified in this way is added as a binder for at least one of the layers.

8. A method according to Claim 7, **characterized in that** a binder, which has at least one modified polyester - as indicated in Claim 1 - for the base layer and/or cover layer, is used for the base layer and/or cover layer, the polyester being diluted with at least one reactive diluent or at least one co-polymerizable compound, in particular (meth)acrylic acid with from 1 to 6 (meth)acryl groups *per* molecule, respectively, onto a polyester content of at least 50% by weight, preferably at least 70% by weight.

9. A method according to Claim 7 or 8, **characterized in that** a binder, which has in each case an average double bond content of from 2•5 to 8 mole/kg, preferably from 3 to 7 mole/kg, is used for the base layer and/or cover layer.

**10.** A method according to any one of Claims 7 to 9, **characterized in that** a binder is used for the base layer which has a viscosity of from 500 to 2 x $10^5$ mPas, preferably from 1500 to $10^5$ mPas, and/or a binder is used for the cover layer which has a viscosity of from 80 to 5 x $10^4$ mPas, preferably from 100 to 5 x $10^{-3}$ mPas.

**11.** A method according to any one of Claims 7 to 10, **characterized in that** a binder is used for the base layer which has at least one modified polyester - as indicated in Claim 1 or 3 - with an average content of double bonds *per* molecule of from 3 to 8, preferably from 4 to 6, or with an average double bond content of from 2 to 8 mole/kg, preferably from 3 to 7 mole/kg, respectively, and/or a binder is used for the cover layer which has at least one modified polyester - as indicated - with an average content of double bonds *per* molecule of from 3 to 6, preferably from 3•5 to 5, or with an average double bond content of from 2 to 8 mole/kg, preferably from 3 to 6•5 mole/kg, respectively.

**12.** A method according to any one of Claims 7 to 11, **characterized in that** a binder is used for the base layer which has at least one modified polyester with an average molar mass of from 500 to $10^4$, preferably from 600 to 5 x $10^3$, and/or a binder is used for the cover layer which has at least one modified polyester with an average molar mass of from 500 to 3000, preferably from 600 to 1500.

**13.** A method according to any one of Claims 7 to 12, **characterized in that** a binder is used for the base layer which has at least one modified polyester with a viscosity of from 3 x $10^3$ to 3 x $10^5$ mPas, preferably from 5 x $10^3$ to 1•5 x $10^5$ mPas, and/or a binder is used for the cover layer which has at least one modified polyester with a viscosity of from 400 to 5 x $10^4$ mPas, preferably from 500 to $10^4$ mPas.

**14.** A method according to any one of Claims 7 to 13, **characterized in that** a binder is used for the base layer which has at least one modified polyester having after radiation hardening a pendulum hardness according to König of from 100 to 240 s, preferably from 150 to 230 s, and/or a binder is used for the covering layer which has at least one modified polyester having after radiation hardening a pendulum hardness according to König of from 60 to 220 s, preferably from 80 to 200 s.

**15.** A method according to any one of Claims 7 to 14, **characterized in that** a binder, to which additives from the group of fillers, wetting agents, up to a proportion of a maximum of 50% by weight, preferably a maximum of 30% by weight, is used for the base layer and/or cover layer.

**16.** A method according to any one of Claims 7 to 15**, characterized in that** the binder or binders is or are hardened by electron radiation at from 175 keV to 1 MeV, preferably from 250 keV to 600 keV, with a dosage of from 5 to 300 kGy, preferably from 10 to 120 kGy.

**Revendications**

**1.** Produit abrasif, dans lequel, au moyen d'au moins un liant à base de polyesters à acides carboxyliques insaturés, appliqué sous la forme d'au moins une couche et durci par rayonnement, des grains abrasifs sont rendus solidaires d'une feuille de support ou d'un corps de support, caractérisé en ce qu'au moins une couche du liant est constituée d'au moins un polyester qui est formé à partir d'acides hydroxycarboxyliques, dicarboxyliques et/ou polycarboxyliques, ne comportant pas d'insaturation en position $\alpha,\beta$ par rapport à un radical carboxyle, et qui est modifié par l'acide acrylique, méthacrylique, éthacrylique ou crotonique et/ou des acides acryliques halogénés, ou son ou leurs dérivés et en ce qu'elle est durcie par rayonnement.

**2.** Produit abrasif suivant la revendication 1, caractérisé en ce que la proportion du polyester modifié, indiqué à la revendication 1, dans le liant est égale à au moins 50 % en poids, de préférence au moins 70 % en poids.

**3.** Produit abrasif suivant la revendication 1 ou 2, caractérisé en ce que le liant comprend au moins un polyester formé, en ce qui concerne les acides composants, à base d'acide(s) hydrocarboxylique(s) aliphatique(s) ne comportant pas d'insaturation $\alpha,\beta$, d'acide(s) dicarboxylique(s) aliphatique(s) ne comportant pas d'insaturation $\alpha,\beta$, cycloaliphatique(s) ne comportant pas d'insaturation $\alpha,\beta$ et/ou aromatique(s) et/ou d'acide(s) polycarboxylique(s) aromatique(s), et/ou au moins un polyester formé, en ce qui concerne les alcools composants, à base de diols, triols et/ou polyols, éventuellement alcoxylés.

4. Produit abrasif suivant l'une des revendications 1 à 3, comprenant une couche de liant solidaire du support, une couche de base et une couche de recouvrement disposée par-dessus ces dernières, ainsi que des grains abrasifs se trouvant dans ces couches, caractérisé en ce que le liant, durci par rayonnement, de la couche de base et/ou de la couche de recouvrement possède, pour chacune, une dureté au pendule de 140 à 240 s, de préférence de 160 à 220 s.

5. Produit abrasif suivant l'une des revendications 1 à 4, caractérisé en ce que le liant, durci par rayonnement, de la couche de base possède une épaisseur de 0,1 à 5,0 mm, de préférence de 0,3 à 2,5 mm et/ou en ce que celui de la couche de recouvrement possède une épaisseur de 0,5 à 8,0 mm, de préférence de 1,5 à 5,5 mm.

6. Produit abrasif suivant l'une des revendications 1 à 5, caractérisé en ce que, dans le cas d'un liant en plusieurs couches, au moins une couche, de préférence la couche de base, est formée d'un liant classique appartenant au groupe formé par la colle animale, la colle de peau ou une résine à base d'urée ou de phénol.

7. Procédé de fabrication d'un produit abrasif suivant l'une des revendications 1 à 6, selon lequel on applique une couche de base, formée de liant, sur une feuille de support ou un corps de support et, sur ou dans cette couche de base, on dépose les corps abrasifs, avec ou sans action d'un champ électrique, on procède au moins à un prédurcissement du liant de la couche de base ou bien on le fait durcir in situ, on applique ensuite une couche de recouvrement formée de liant et on durcit le liant par rayonnement d'électrons, caractérisé en ce que, comme liant pour au moins l'une des couches, on utilise au moins un polyester qui est formé à base d'acides hydroxycarboxyliques, dicarboxyliques et/ou polycarboxyliques sans insaturation $\alpha,\beta$ et qui est modifié de la manière indiquée dans les revendications précédentes, ou au moins un liant à base d'un tel polyester modifié.

8. Procédé suivant la revendication 7, caractérisé en ce que, pour la couche de base et/ou la couche de recouvrement, on utilise un liant qui comprend, pour la couche de base et/ou la couche de recouvrement, au moins un polyester modifié de la manière indiquée à la revendication 1, ce polyester étant dilué, au moyen d'au moins un diluant réactif ou d'au moins une liaison copolymérisable, notamment un ester de l'acide (méth)acrylique à 1 à 6 radicaux (méth)acryliques par molécule, jusqu'à une proportion de polyester qui est d'au moins 50 % en poids, de préférence d'au moins 70 % en poids.

9. Procédé suivant la revendication 7 ou 8, caractérisé en ce que, pour la couche de base et/ou la couche de recouvrement, on utilise un liant qui comprend, pour chacune, une proportion moyenne de doubles liaisons de 2,5 à 8 mol/kg, de préférence de 3 à 7 mol/kg.

10. Procédé suivant l'une des revendications 7 à 9, caractérisé en ce qu'on utilise, pour la couche de base, un liant ayant une viscosité de 500 à $2.10^5$ mPa, de préférence de 1 500 à $10^5$ mPa, et/ou, pour la couche de recouvrement, un liant ayant une viscosité de 80 à $5.10^4$ mPa, de préférence de 100 à $5.10^3$ mPa.

11. Procédé suivant l'une des revendications 7 à 10, caractérisé en ce qu'on utilise, pour la couche de base, un liant comprenant au moins un polyester modifié de la manière indiquée à la revendication 1 ou 3 et ayant un nombre moyen de doubles liaisons de 3 à 8, de préférence de 4 à 6, par molécule ou une proportion moyenne en doubles liaisons de 2 à 8 mol/kg, de préférence de 3 à 7 mol/kg, et/ou, pour la couche de recouvrement, un liant comprenant au moins un polyester modifié de la manière indiquée et ayant un nombre moyen de doubles liaisons de 3 à 6, de préférence de 3,5 à 5, par molécule ou une proportion moyenne en doubles liaisons de 2 à 8 mol/kg, de préférence de 3 à 6,5 mol/kg.

12. Procédé suivant l'une des revendications 7 à 11, caractérisé en ce qu'on utilise, pour la couche de base, un liant comprenant au moins un polyester modifié ayant une masse molaire moyenne de 500 à

10$^4$, de préférence de 600 à 5.10$^3$, et/ou, pour la couche de recouvrement, un tel liant comprenant au moins un polyester modifié ayant une masse molaire moyenne de 500 à 3 000, de préférence de 600 à 1 500.

**13.** Procédé suivant l'une des revendications 7 à 12, caractérisé en ce qu'on utilise, pour la couche de base, un liant comprenant au moins un polyester modifié ayant une viscosité de 3.10$^3$ à 3.10$^5$ mPa, de préférence de 5.10$^3$ à 1,5.10$^5$ mPa, et/ou, pour la couche de recouvrement, un tel liant comprenant au moins un polyester modifié ayant une viscosité de 400 à 5.10$^4$ mPa, de préférence de 500 à 10$^4$ mPa.

**14.** Procédé suivant l'une des revendications 7 à 13, caractérisé en ce qu'on utilise, pour la couche de base, un liant comprenant au moins un polyester modifié possédant, après durcissement par rayonnement, une dureté au pendule, suivant l'essai de König, de 100 à 240 s, de préférence de 150 à 230 s, et/ou, pour la couche de recouvrement, un tel liant comprenant au moins un polyester modifié possédant, après le durcissement par rayonnement, une dureté au pendule, suivant l'essai de König, de 60 à 220 s, de préférence de 80 à 200 s.

**15.** Procédé suivant l'une des revendications 7 à 14, caractérisé en ce qu'on utilise, pour la couche de base et/ou la couche de recouvrement, un liant auquel on ajoute des additifs, appartenant au groupe des charges et des réticulants, jusqu'à une proportion qui est d'au maximum 50 % en poids, de préférence d'au maximum 30 % en poids.

**16.** Procédé suivant l'une des revendications 7 à 15, caractérisé en ce qu'on durcit le ou les liants par rayonnement d'électrons de 175 keV à 1 MeV, de préférence de 250 keV à 600 keV, à raison d'une dose de 5 à 300 kGy, de préférence de 10 à 120 kGy.